(19) Europäisches Patentamt
European Patent Office
Office européen des brevets

(11) Publication number: **0 661 337 A1**

(12) # EUROPEAN PATENT APPLICATION

(21) Application number: **94120237.6**

(51) Int. Cl.[6]: **C08J 9/14**

(22) Date of filing: **20.12.94**

(30) Priority: **28.12.93 JP 335674/93**

(43) Date of publication of application:
**05.07.95 Bulletin 95/27**

(84) Designated Contracting States:
**DE FR GB IT NL**

(71) Applicant: **TOSHIBA SILICONE CO., LTD.**
**2-31, Roppongi 6-chome**
**Minato-ku**
**Tokyo 106 (JP)**

(72) Inventor: **Takanashi, Masanori, c/o Toshiba Silicone**
**Co., Ltd.,**
**2-31, Roppongi 6-chome**
**Minato-ku,**
**Tokyo (JP)**
Inventor: **Fujimoto, Tetsuro, c/o Toshiba Silicone**
**Co., Ltd.,**
**2-31, Roppongi 6-chome**
**Minato-ku,**
**Tokyo (JP)**

(74) Representative: **Hansen, Bernd, Dr. Dipl.-Chem. et al**
**Hoffmann, Eitle & Partner,**
**Patentanwälte,**
**Arabellastrasse 4**
**D-81925 München (DE)**

(54) **Foamable polyorganosiloxane.**

(57) A formable polyorganosiloxane composition is disclosed, comprising (A) and alkenyl group-containing polyorganosiloxane having at least two units represented by the formula (I) described hereinabove in the molecule and at least one phenyl group bonded to the silicon atom in the molecule, (B) a polyorganohydrogensiloxane having at least 3 units represented by the formula (II) described hereinabove in the molecule, (C) a catalyst selected from the group consisting of platinum and a platinum compound, and (D) a monohydric or polyhydric alcohol having from 1 to 12 carbon atoms. The composition can form a foam having a high foaming ratio, a low apparent density, and an improved foam stabilizing property.

EP 0 661 337 A1

## FIELD OF THE INVENTION

The present invention relates to a novel foamable polyorganosiloxane composition, and more specifically it relates to a foamable polyorganosiloxane composition capable of forming a foam having a high foaming ratio, a low apparent density, and an improved foam stabilizing property.

## BACKGROUND OF THE INVENTION

Various kinds of foamable liquid polyorganosiloxane composition have already been known. In these foaming mechanisms, a polyorganosiloxane composition having a curing mechanism accompanied by a dehydrogenation reaction at curing is cured, and a hydrogen gas generated in the case is introduced into the system to obtain a spongy cured product. Thus, since a foaming agent is not compounded, the foamable liquid polyorganosiloxane composition has many advantages that the composition is simple, toxic decomposition products are not formed as occuring in the case of using a foaming agent, etc. Accordingly, since in addition to a heat resistance, a cold resistance, and a weather resistance which are inherent properties in the polysiloxane, the composition is easily handled and the flame retardant composition can be easily obtained, the composition is widely used for fire resistant airtight seals, heat insulators, acoustic absorbers, vibration insulators, etc., as a foam having a rubbery elasticity.

The following compositions are known as such a foamable liquid polyorganosiloxane composition.

JP-A-51-46352 (the term "JP-A" as used herein means an "unexamined published Japanese patent application") discloses a foamable polyorganosiloxane composition having a mechanism of curing a silanol group-containing polyorganosiloxane and a polyorganohydrogensiloxane with a platinum type catalyst and forming a foam with a hydrogen gas which generates in the case. Further, the improvement of the foaming mechanism is proposed. That is, JP-A-4-88034 discloses a foamable polyorganosiloxane composition using (1) a straight chain polyorganosiloxane having a hydroxyl group bonded to each of the silicon atoms at both the terminals, (2) a straight chain polyorganosiloxane having a hydroxyl group bonded to silicon atoms at the intermediate portion, and (3) a silanol group-containing polyorganosiloxane. JP-A-5-1169 also discloses a foamable polyorganosiloxane composition using the above-described polyorganosiloxanes (1) and (2) together with an alcohol.

JP-A-54-135865 discloses a foamable polyorganosiloxane composition which forms a foam with a hydrogen gas generated by the reaction of a polyorganohydrogensiloxane and water by co-existing water in the case of obtaining a rubbery elastic material by crosslinking in the reaction mechanism of hydrosilylating an alkenyl group-containing polyorganosiloxane and the polyorganohydrogensiloxane in the presence of a platinum type catalyst. As a polyorganosiloxane composition capable of further improving the foaming mechanism thereof, a foamable polyorganosiloxane composition wherein a liquid alcohol is used in place of water and a fluorinated silicone foam stabilizer is compounded therewith is disclosed in JP-A-5-70692.

JP-A-57-180641 discloses a foamable polyorganosiloxane composition containing a silanol group-containing polyorganosiloxane, a polyorganohydrogensiloxane, and an aminoxy compound.

These foamable polyorganosiloxane compositions all have the problems that foams formed by a hydrogen gas generated are enlarged to reduce the foam stabilizing property and also when a hydrogen gas is largely generated for lowering the apparent density of the foam obtained, the composition cannot take in the whole gas generated and foams are liable to be broken, whereby a foam which has a low density and is uniformly foamed is not obtained. Accordingly, there are restrictions in the heat-insulating property, the acoustic absorbing property, and the vibration insulating property.

## SUMMARY OF THE INVENTION

Accordingly, an object of the present invention is to provide a foamable polyorganosiloxane composition having an excellent foam stabilizing property and capable of giving a foam having a low apparent density with a high foaming ratio.

As a result of various investigations to achieve the object described above, it has been found that the object can be achieved by the existence of phenyl groups bonded to the silicon atom of an alkenyl group-containing polyorganosiloxane, which is a base polymer, in the foaming mechanism occurring by the coexistence of an alcohol in a hydrosilylation reaction. The present invention has been completed based on this finding.

According to the present invention, there is provided a foamable polyorganosiloxane composition comprising:

(A) an alkenyl group-containing polyorganosiloxane having at least 2 units represented by the following formula (I) in the molecule and having at least one phenyl group bonded to the silicon atom in the molecule;

$$R^1_aR^2_bSiO_{[4-(a+b)]/2} \qquad (I)$$

wherein $R^1$ represents an alkenyl group; $R^2$ which may be the same or different each represents a substituted or unsubstituted monovalent hydrocarbon group which does not have an aliphatic unsaturated bond; a represents 1 or 2, b represents an integer of from 0 to 2; and a + b represents an integer of from 1 to 3;

(B) a polyorganohydrogensiloxane having at least 3 units represented by the following formula (II) in the molecule in an amount that the number of the hydrogen atoms bonded to the silicon atoms thereof is from 3 to 1,000 to one alkenyl group of the component (A);

$$R^3_cH_dSiO_{[4-(c+d)]/2} \qquad (II)$$

wherein $R^3$ which may be the same or different each represents a substituted or unsubstituted monovalent hydrocarbon group which does not have an aliphatic unsaturated bond; c represents an integer of from 0 to 2; d represents 1 or 2; and c + d represents an integer of from 1 to 3;

(C) a catalyst selected from the group consisting of platinum and a platinum compound, in an amount that the amount of the platinum atom is from 0.1 to 1,000 ppm by weight to the component (A); and

(D) a monohydric or polyhydric alcohol having from 1 to 12 carbon atoms and which does not have an aliphatic unsaturated bond, in an amount that the number of the hydroxyl group is from 0.01 to 10 to one hydrogen atom bonded to the silicon atom of the component (B).

## DETAILED DESCRIPTION OF THE INVENTION

The present invention is described in detail below.

The component (A) used in the present invention is the alkenyl group-containing polyorganosiloxane having at least 2 units represented by the following formula (I) in the molecule and at least one phenyl group bonded to the silicon atom thereof in the molecule;

$$R^1_aR^2_bSiO_{[4-(a+b)]/2} \qquad (I)$$

wherein $R^1$, $R^2$, a, and b are the same as defined above.

The component (A) is the base polymer of the composition of the present invention. In the component (A), the alkenyl group bonded to the silicon atom performs crosslinking by the hydrosilylation reaction with the hydrogen atoms bonded to the silicon atoms in the component (B) and also the component (A) is a component which imparts a strength to the foam in combination with other components.

The component (A) does not have any particular restriction on the molecular structure thereof if it is the alkenyl group-containing polyorganosiloxane having at least 2 units represented by the formula (I) described above in the molecule and at least one phenyl group bended to the silicone atom thereof in the molecule. The polyorganosiloxane having a straight, cyclic, or branched siloxane skeleton can be used, but from the point of imparting an excellent rubbery elasticity and a high mechanical strength to the composition, the use of the straight chain alkenyl group-containing polyorganosiloxane or the combined use of the straight chain alkenyl group-containing polyorganosiloxane and the branched alkenyl group-containing polyorganosiloxane is preferred.

There is no particular restriction on the degree of polymerization of the polyorganosiloxane but the degree of polymerization is preferably from 10 to 3,000, and more preferably from 50 to 2,000. If the degree of polymerization is less than 10, the mechanical properties of the foam obtained by curing are insufficient, while if the degree of polymerization is over 3,000, the handling of the composition in the uncured state becomes difficult.

In the formula (I) described above, examples of the alkenyl group represented by $R^1$ are vinyl, allyl, butenyl, etc., and from the point of easiness of the synthesis of the polyorganosiloxane, vinyl is preferred.

Examples of the monovalent hydrocarbon group represented by $R^2$ are alkyl groups such as methyl, ethyl, propyl, butyl, pentyl, hexyl, octyl, decyl, dodecyl, etc.; cycloalkyl groups such as cyclohexyl, etc.; aralkyl groups such as 2-phenylethyl, 2-phenylpropyl, etc.; aryl groups such as phenyl, etc.; and substituted monovalent hydrocarbons such as chloromethyl, 3,3,3-trifluoropropyl, chlorophenyl, etc., and from the

easiness of the synthesis thereof, methyl is preferred exclusive of a phenyl group described hereinafter.

a and b are as described above and from the point of easiness of the synthesis, it is preferred that a is 1.

The unit represented by the formula (I) may exist at the terminal of the molecule or at the intermediate of the molecule, but for imparting good mechanical properties to the foam obtained by curing the composition, it is preferred that at least a part of the units exists at the terminal of the molecule as a system of, for example, $R^1R^2_2SiO_{1/2}$.

In the siloxane units other than the unit represented by the formula (I) in the component (A), the organic groups bonded to the silicon atom may be the same or different and examples of these organic groups are the same monovalent substituted or unsubstituted hydrocarbon groups shown above as $R^2$. From the points of the easiness of the synthesis and imparting the characteristics of a polyorganosiloxane, such as the heat resistance, the cold resistance, etc., to the foam obtained by curing the composition, a methyl group is preferred exclusive of a phenyl group described hereinafter.

By the existence of a phenyl group bonded to the silicon atom of the component (A), the surface tension of the component (A) is increased, a hydrogen gas generated is kept in the foams or cells and the foams or cells are not broken, whereby a low density foam having a large amount of fine and uniform foams can be formed. At least one such a phenyl group exists in one molecule of the component (A) and the ratio of the phenyl group to the total organic groups bonded to the silicon atoms of the component (A) is preferably from 0.1 to 30 mole%, and more preferably from 1 to 15 mole%.

Such a phenyl group may exist in the unit represented by the formula (I) and/or in the other units, but from the easiness of the synthesis, it is preferred that the phenyl group exists by constituting a $(CH_3)(C_6H_5)SiO$ unit and/or a $(C_6H_5)_2SiO$ unit as the other units.

If the amount of the phenyl group is less than 0.1 mole%, a foam having a large foaming ratio and containing fine and uniform foams is not obtained, while if the amount thereof is over 30 mole%, the synthesis of the polysiloxane used as the component (A) becomes difficult and also the compatibility of the component (A) with the component (B) described below becomes poor, whereby foams generated become coarse and the foaming ratio is decreased.

The component (B) used in the present invention is the polyorganohydrogensiloxane having at least 3 units represented by the following formula (II) in the molecule;

$$R^3_cH_dSiO_{[4-(c+d)]/2} \qquad (II)$$

wherein $R^3$, c and d are the same as defined above.

In the component (B), the hydrogen atoms bonded to the silicon atoms thereof contribute as a crosslinking agent for carrying out the hydrosilylation reaction with the alkenyl group in the component (A) and have a function to generate a hydrogen gas by reacting with the hydroxyl groups in the component (D).

The component (B) is not particularly restricted if the component has at least 3 hydrogen atoms directly bonded to the silicon atoms in the molecule, and the polyorganohydrogensiloxane having a straight chain, cyclic, or branched siloxane skeleton can be used. From the easiness of the synthesis, the straight chain polyorganohydrogensiloxane or the polyorganohydrogensiloxane composed of the $R^3_2HSiO_{1/2}$ unit and the $SiO_2$ unit is preferable.

$R^3$s may be the same or different and each is a substituted or unsubstituted monovalent hydrocarbon group. Examples of the group are alkyl groups such as methyl, ethyl, propyl, butyl, hexyl, octyl, decyl, dodecyl, etc.; cycloalkyl groups such as cyclohexyl, etc.; aryl groups such as phenyl, etc.; and substituted monovalent hydrocarbon groups such as 3,3,3-trifluoropropyl, chlorophenyl, etc. From the easiness of the synthesis, a methyl group is preferable.

In the siloxane unit other than the unit represented by the formula (II) in the component (B), the organic groups bonded to the silicon atom may be the same or different and examples of the organic groups are those as illustrated on $R^3$. From the easiness of the synthesis, a methyl group is preferable.

The compounding amount of the component (B) is the amount that the number of hydrogen atoms bonded to the silicon atoms is from 3 to 1,000, and preferably from 5 to 100 to one alkenyl group of the component (A). If the number of the hydrogen atoms is less than 3, the amount of the hydrogen gas generated is small and also the occurrence of crosslinking is small, thereby decreasing the mechanical strength, while if the number of the hydrogen atoms is over 1,000, the properties (in particular, the heat resistance) after curing are largely changed.

The component (C) used in the present invention is a catalyst used for curing the composition of the present invention by the hydrosilylation reaction between the alkenyl group in the component (A) and the hydrogen atoms bonded to the silicon atoms in the component (B) and also for causing the dehydrogenation-condensation reaction between the hydrogen atoms and the hydroxyl group in the component (D). Examples of the component (C) which can be used are platinum compounds such as chloroauric acid, a complex obtained from an alcohol and chloroauric acid, a platinum-olefin complex, a platinum-ketone complex, a platinum-vinylsiloxane complex, etc.; platinum supported on a carrier such as alumina, silica, etc.; and simple platinum in a form of, for example, platinum black, etc.

The component (C) is used in the necessary amount as the catalyst, and the amount thereof is from 0.1 to 1,000 ppm, and preferably from 0.5 to 200 ppm, calculated as a platinum atom. If the amount of the component (C) is less than 0.1 ppm, the concentration of the catalyst is low, whereby foaming and curing become insufficient. Further, if the amount thereof is over 1,000 ppm, the further effect is not obtained and also since the component (C) contains expensive platinum or platinum compound, the use in such a large amount thereof is economically undesirable.

The component (D) used in the present invention is an alcohol having from 1 to 12 carbon atoms and which does not have an aliphatic unsaturated bond. The alcohol may be monohydric or polyhydric, and the carbon chain therein may be straight chain or branched or may have an aromatic ring to which a hydroxyl group is not directly bonded. Examples of such an alcohol are monohydric alcohols such as methanol, ethanol, n-propanol, isopropanol, n-butanol, 2-butanol, tert-butanol, n-octanol, benzyl alcohol, etc.; and polyhydric alcohols such as ethylene glycol, propylene glycol, glycerol, trimethylolpropane, etc. From the points that the hydroxyl equivalent is large, the addition in a small amount thereof is effective, and the influence thereof to the heat resistance and the weather resistance of the foam obtained by curing is less, a monohydric alcohol having from 1 to 4 carbon atoms or a dihydric alcohol having from 2 to 4 carbon atoms are preferred.

The compounding amount of the component (D) is the amount that the number of the hydroxyl groups in the component (D) is from 0.01 to 10, and preferably from 0.1 to 5 to one hydrogen atom bonded to the silicon atom in the component (B). If the amount of the hydroxyl group is less than 0.01, the amount of the hydrogen gas generated is small, whereby a foam having a low density is not obtained. Further, if the amount thereof is over 10, of the hydrogen atoms bonded to the silicon atoms in the component (B), the portion of the hydrogen atoms contributing the crosslinking reaction between the component (A) and the component (B) is relatively reduced, whereby the mechanical strength of the foam obtained by curing is decreased and a foam breaking phenomenon occurs during foaming.

If necessary, the foamable polyorganosiloxane composition of the present invention can be compounded with a polyorganosiloxane blocked with a terminal triorganosilyl group or a silanol group, which does not correspond to the component (A) and the component (B), as a diluent so long as it does not impair the object of the present invention. The foamable polyorganosiloxane composition of the present invention can further be compounded with a filler or a pigment such as fumed silica, precipitated silica, a quartz powder, diatomaceous earth, titanium oxide, aluminum oxide, zinc oxide, iron oxide, cerium oxide, mica, clay, calcium carbonate, a metal powder, carbon black, graphite, etc.; flame retardants such as zinc carbonate, manganese carbonate, etc.; heat resistance improvers such as cerium hydroxide, etc.

According to the first embodiment of the present invention, the foamable polyorganosiloxane composition of the present invention may be stored as a 1st package containing the component (A), the component (C), and the component (D), and as a 2nd package containing the component (B), and at the use thereof, they are mixed and reacted with stirring to simultaneously proceed curing and foaming. According to the second embodiment of the present invention, in place of the 2nd package described above, a 2nd package containing a part of the component (A) and the component (B) may be prepared and used with the 1st package. In the case of compounding additives such as a filler, etc., the additives are generally contained in the 1st package, but the additives may be added at the use of the components in the packages. Further, in the second embodiment, the additives may be compounded in the 2nd package if there is no possibility to proceed a reaction of the content during storing the 2nd package.

There is no particular restriction on the mixing temperature if the temperature is in the range at which the component (D) is not volatilized, but considering the workability, mixing is generally carried out at a temperature of from 0°C to 60°C.

When curing and foaming are simultaneously carried out using the foamable polyorganosiloxane composition of the present invention, the composition shows an excellent foam stabilizing effect and a low density rubbery foam having fine and uniform foams is obtained at a high foaming ratio. Accordingly, the foamable polyorganosiloxane composition of the present invention is suitably used for heat-insulating materials, acoustic absorbing materials, vibration insulating materials, cushion materials, packings, gaskets, pads, airtight sealing materials, etc., each having a low density and a high function by utilizing the features of a silicone, such as the heat resistance, the cold resistance, the humidity resistance, the good feeling, the safety, etc.

The present invention is described in more detail by the following examples and comparative examples, wherein all parts are by weight and the viscosity is at 25 ° C. In addition, the present invention is not limited by these examples.

In the following examples and the comparative examples, the chain polysiloxanes (A-1 to A-6 and B-1) having the following average structural formulae and the viscosities were used as the component (A) and the component (B), respectively. In addition, the structural formulae each having plural intermediate siloxane units all do not show block copolymers but simply show the number of siloxane units, and these polysiloxanes are random copolymers. Further, in the following formulae, the following abbreviations were used.

Me: Methyl group; Vi: Vinyl group; Ph: Phenyl group

A-1: α,ω-Divinylpolymethylphenylsiloxane

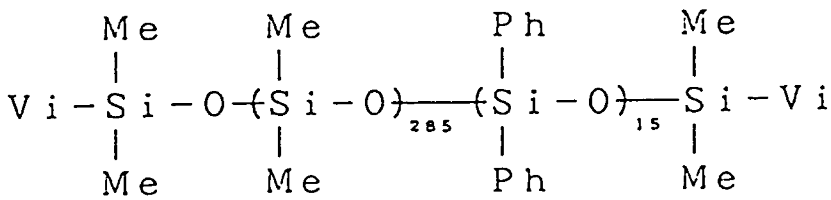

Viscosity: 3,000 cP

A-2: α,ω-Divinylpolymethylphenylsiloxane

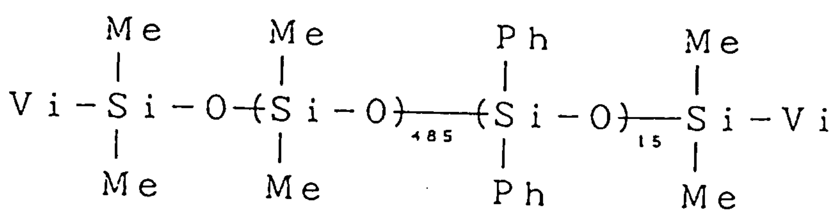

Viscosity: 3,500 cP

A-3: α,ω-Divinylpolymethylphenylsiloxane

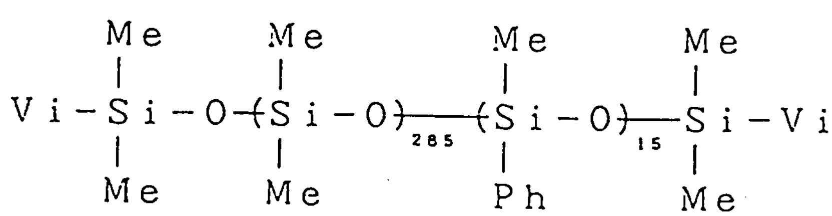

Viscosity: 2,500 cP

A-4: α,ω-Divinylpolydimethylsiloxane

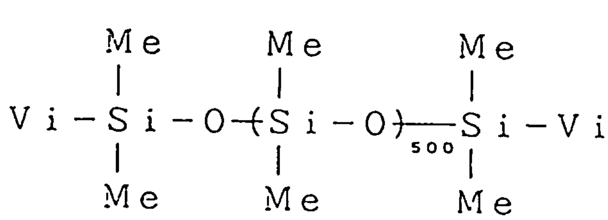

Viscosity: 800 cP

A-5: α,ω-Divinylpolymethylphenylsiloxane

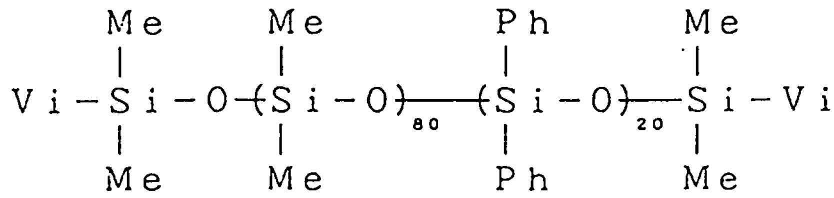

Viscosity: 800 cP

A-6: α,ω-Divinylpolymethylphenylsiloxane

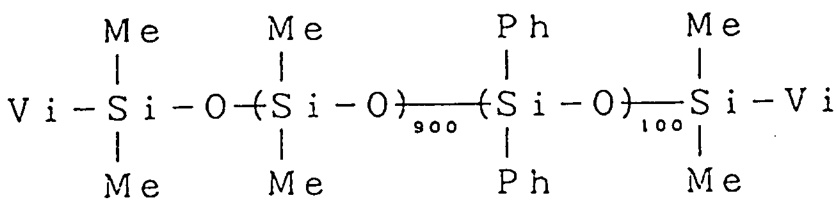

Viscosity: 100,000 cP

B-1: Polymethylhydrogensiloxane

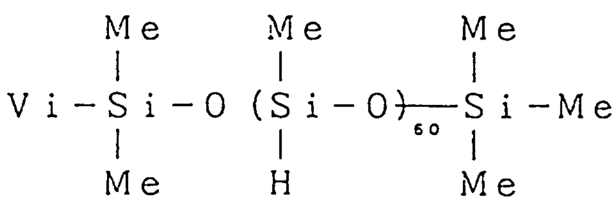

Viscosity: 25 cSt

Further, a platinum-vinylsiloxane complex (C-1) containing 1% by weight of platinum atom obtained from chloroauric acid and polymethylvinylsiloxane was used as the component (C).

Methanol, n-propanol, 2-butanol, or ethylene glycol was used as the component (D).

Examples 1 to 8 and Comparative Examples 1 to 3

The components shown in Table 1 below were mixed at the compounding ratios shown in Table 1, and the respective composition was prepared.

That is, as the component (A), the alkenyl group-containing polyorganosiloxanes each having phenyl groups were used in Examples 1 to 8 and the alkenyl group-containing polyorganosiloxanes each having no phenyl group were used in Comparative Examples 1 to 3.

The OH/H ratio and the H/Vi ratio in each composition are shown in Table 1. In addition, OH shows the hydroxyl group in the alcohol compounded with the composition, and H and Vi show the hydrogen atom and the vinyl group, respectively, bonded to the silicon atoms of the polysiloxane compounded with the composition.

By mixing the components, foaming and curing proceeded at room temperature and after allowing to stand each of the products for 30 minutes, foams having a rubber elasticity were obtained except for the case of Comparative Example 1. The foaming ratio and the size of cell of each foam thus obtained were measured. The results obtained are shown in Table 1 below.

Table 1

| | Example | | | | | | | | Comparative Example | | |
|---|---|---|---|---|---|---|---|---|---|---|---|
| | 1 | 2 | 3 | 4 | 5 | 6 | 7 | 8 | 1 | 2 | 3 |
| **Components (part)** | | | | | | | | | | | |
| A-1 | 100 | 100 | 100 | 100 | | | | | | | |
| A-2 | | | | | 100 | | | | | | |
| A-3 | | | | | | 100 | | | | | |
| A-4 | | | | | | | | | 100 | 100 | 100 |
| A-5 | | | | | | | 100 | | | | |
| A-6 | | | | | | | | 100 | | | |
| B-1 | 25 | 25 | 25 | 25 | 25 | 25 | 25 | 25 | 25 | 25 | 25 |
| C-1 | 0.3 | 0.3 | 0.3 | 0.15 | 0.3 | 0.3 | 0.3 | 0.3 | 0.3 | 0.3 | 0.3 |
| Methanol | 4 | | | | | | | | 4 | 2 | |
| n-Propanol | | 6 | | | 6 | 6 | 6 | 6 | | | 2 |
| 2-Butanol | | | 8 | | | | | | | | |
| Ethylene glycol | | | | 6 | | | | | | | |
| **Functional group ratio** | | | | | | | | | | | |
| OH/H | 0.30 | 0.24 | 0.26 | 0.47 | 0.24 | 0.24 | 0.24 | 0.24 | 0.30 | 0.15 | 0.08 |
| H/Vi | 50.6 | 50.6 | 50.6 | 50.6 | 47.5 | 48.8 | 110 | 12.2 | 77.6 | 77.6 | 77.6 |
| **Foam** | | | | | | | | | | | |
| Foaming ratio | 16.5 | 15.0 | 12.5 | 12.4 | 10.8 | 12.6 | 14.5 | 12.5 | -*1 | 4.5 | 5.0 |
| Cell size (mm) | 0.1 | 0.1 | 0.2 | 0.1 | 0.5 | 0.2 | 0.3 | 0.1 | -*1 | 5.0 | 5.0 |

-*1: At curing, cells were broken and a foam could not be formed.

As shown in the above results, foams each having a high foaming ratio and fine and uniform foams (cells) were obtained in Examples 1 to 8. On the other hand, in Comparative Example 1, when the same ratio of OH/H as in Example 1 was used, cells were broken during curing even though foamed and a foam could not be obtained. Further, in Comparative Examples 2 and 3, foams were obtained by lowering OH/H ratio, but the foaming ratio was low and the cell sizes were coarse as compared with the foams obtained in Examples 1 to 8.

While the invention has been described in detail and with reference to specific embodiments thereof, it will be apparent to one skilled in the art that various changes and modifications can be made therein without departing from the spirit and scope thereof.

## Claims

**1.** A foamable polyorganosiloxane composition comprising

(A) an alkenyl group-containing polyorganosiloxane having at least two units represented by the following formula (I) in the molecule and at least one phenyl group bonded to the silicon atom in the molecule;

$$R^1_aR^2_bSiO_{[4-(a+b)]/2} \quad (I)$$

wherein $R^1$ represents an alkenyl group; $R^2$ which may be the same or different each represents a substituted or unsubstituted hydrocarbon group which does not have an aliphatic unsubstituted bond; a represents 1 or 2; b represents an integer of from 0 to 2; and a + b represents an integer of from 1 to 3;

(B) a polyorganohydrogensiloxane having at least 3 units represented by the following formula in the molecule;

$$R^3_cH_dSiO_{[4-(c+d)]/2} \quad (II)$$

wherein $R^3$ which may be the same or different each represents a substituted or unsubstituted monovalent hydrocarbon group which does not have an aliphatic unsaturated bond; c represents an integer of from 0 to 2; d represents 1 or 2; and c + d represents an integer of from 1 to 3, in an amount that the number of the hydrogen atoms bonded to the silicon atoms thereof is from 3 to 1,000 per one alkenyl group of the component (A);

(C) a catalyst selected from the group consisting of platinum and a platinum compound, in an amount that the amount of the platinum atom is 0.1 to 1.000 ppm by weight to the amount of the component (A); and

(D) a monohydric or polyhydric alcohol having from 1 to 12 carbon atoms and which does not have an aliphatic unsaturated bond, in an amount that the number of the hydroxyl group is 0.01 to 10 to one hydrogen atom bonded to the silicon atom of the component (B).

**2.** The composition as claimed as claim 1, wherein the component (A) has a degree of polymerization of from 10 to 3,000.

**3.** The composition as claimed in claims 1 or 2, wherein the component (B) is a straight chain polyorganohydrogensiloxane or a polyorganohydrogensiloxane composed of $R^3{}_2HSiO_{\frac{1}{2}}$ units and $SiO_2$ units.

**4.** The composition as claimed in any one of claims 1, 2 or 3, wherein the component (D) is a monohydric alcohol having 1 to 4 carbon atoms, or a dihydric alcohol having 2 to 4 carbon atoms.

**5.** Use of the composition according to any one of the preceding claims for foamed products.

European Patent Office

# EUROPEAN SEARCH REPORT

Application Number
EP 94 12 0237

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 355 380 (GENERAL ELECTRIC)<br>* page 4, line 18 *<br>* page 5, line 36 - line 40 *<br>* page 5, line 54 - line 57; claim 1 *<br>--- | 1-5 | C08J9/14 |
| X | EP-A-0 506 241 (DOW CORNING)<br>* column 3, line 38; claim 1 *<br>* column 4, line 6 *<br>--- | 1-5 | |
| X | EP-A-0 495 566 (DOW CORNING)<br>* page 3, line 39; claim 10 *<br>* page 4, line 5 *<br>--- | 1-5 | |
| X | EP-A-0 287 087 (WACKER)<br>* page 2, line 47; claim 1 *<br>----- | 1-5 | |
| | | | TECHNICAL FIELDS SEARCHED (Int.Cl.6) |
| | | | C08J |

The present search report has been drawn up for all claims

| Place of search | Date of completion of the search | Examiner |
|---|---|---|
| THE HAGUE | 7 April 1995 | Lentz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)